# FASCICULE DE BREVET EUROPEEN

(11) **EP 0 434 537 B1**
(45) Date de publication et mention de la délivrance du brevet: **07.12.1994**
(21) Numéro de dépôt: 90403630.8
(22) Date de dépôt: 18.12.1990
(51) Int. Cl.: H05B 3/86

(54) **Vitrage chauffant**
Beheizte Glasscheibe
Heated windscreen

(30) Priorité: 21.12.1989 FR 8916965
(43) Date de publication de la demande: 26.06.1991
(73) Titulaire: SAINT-GOBAIN VITRAGE INTERNATIONAL, 92400 Courbevoie (FR)
(72) Inventeur: De Paoli, Martial, F-45460 Les Bordes (FR)
(74) Mandataire: Muller, René

(56) Documents cités:
- FR-A- 1 398 776
- FR-A- 1 533 535
- FR-A- 2 310 979
- US-A- 2 650 976
- US-A- 3 895 433

## Description

La présente invention concerne un vitrage chauffant feuilleté comprenant au moins deux feuilles rigides, notamment en verre, et au moins une couche intercalaire souple, une desdites au moins une couche intercalaire souple portant sur sa face au contact de l'une des feuilles rigides un réseau chauffant de fils métalliques fins de résistance électrique disposés entre deux bandes d'amenée de courant.

Il est connu notamment d'après les brevets FR-A-1 533 535 et US-A-3 895 433, d'utiliser des vitrages chauffants du type décrit ci-dessus pour équiper des véhicules de transport aérien, maritime, terrestre. Ces vitrages sont notamment utilisés comme pare-brise ou latéraux de cockpits d'avions, comme pare-brise de bateaux, de trains Ces vitrages comprennent un réseau formé de fils métalliques fins posés en parallèle entre deux bandes d'amenée du courant (ou collecteurs) reliées à une source de tension électrique extérieure au vitrage. Ces conducteurs posés selon des directrices rectilignes sont le plus souvent ondulés ou frisés le long de ces directrices rectilignes de façon à mieux répartir la dissipation de la chaleur , à réduire l'importance des phénomènes de diffraction optique provoqué par la présence du réseau, comme à augmenter la longueur de fil pour une distance entre collecteurs donnée.

Lorsque le vitrage chauffant est utilisé en tant que vitrage avion par exemple, il est soumis dans les conditions d'usage à des contraintes importantes dues aux différences de pression et de température entre les deux faces du vitrage, c'est-à-dire la face orientée vers l'intérieur du cockpit et la face orientée vers l'extérieur. Ces contraintes provoquent des forces de cisaillement entrainant un déplacement relatif des différents éléments constituant la structure feuilletée et par là, en particulier, un déplacement de la (ou des) couche(s) intercalaire(s), entrainant un déplacement relatif des bandes d'amenées de courant par rapport aux fils pouvant aller jusqu'à provoquer la rupture de fils de résistance.

La rupture de fils de résistance perturbe alors la régulation de température du vitrage et entraine des surchauffes localisées qui accentuent encore la dégradation du vitrage.

Pour pallier à cet inconvénient, il a été proposé de donner plus de souplesse aux fils de résistance en formant un réseau dit "retourné" tel que décrit par exemple dans la publication de brevet français 1 398 776.

Dans cette structure, à réseau retourné, le réseau chauffant est placé sur l'intercalaire, et directement sur la feuille de verre constituant l'élément extérieur du vitrage chauffant alors que les deux bandes d'amenée du courant sont placées sur le côté de l'intercalaire opposé au côté portant les fils résistants, l'extrémité de ces fils étant recourbée à 180° pour venir au contact des bandes d'amenée du courant.

Le réseau dit retourné confère aux fils de résistance une souplesse qui augmente sa résistance aux efforts mécaniques résultant des écarts de température et de la différence de pression entre les faces du vitrage.

Cette solution est généralement satisfaisante lorsque le réseau chauffant est au contact de la feuille de verre extérieure. En revanche, cette solution n'est pas entièrement satisfaisante, lorsque le réseau chauffant est au contact d'une feuille rigide, en particulier en verre, intérieure à la structure et on observe alors des casses de fils de résistance.

On connait aussi d'après la publication FR-A-2 310 979 un vitrage chauffant dans lequel la résistance chauffante est constituée d'un revêtement continu électro-conducteur sur lequel sont collés deux collecteurs. Pour éviter l'écaillage à froid des plaques de verre du aux différences de dilatation entre les feuiles rigides en verre et l'intercalaire en polyvinylbutyral (PVB), il est prévu d'interposer une feuille de polyuréthane entre la feuille rigide extérieure et l'intercalaire en PVB, et un cadre séparateur entre l'intercalaire en PVB et la feuille de verre intérieure.

Le problème de la rupture de fils fins de résistance électrique n'est pas abordé dans ce document.

Si ce problème de rupture des fils peut être partiellement du aux différences de dilatation entre les éléments du vitrage feuilleté comme c'est le cas pour l'écaillage à froid des feuilles de verre, il est surtout du aux différences de pressions s'exercant sur les faces du vitrage, notamment lorsqu'il s'agit d'un vitrage avion et lorsqu'il est en altitude, ces différences entrainant une mise en flexion dudit vitrage.

L'invention obvie aux inconvénients cités et propose une nouvelle structure de vitrage chauffant à fils fins métalliques de résistance électrique.

Le vitrage chauffant selon l'invention comprend au moins deux feuilles rigides, notamment des feuilles de verre, au moins une couche intercalaire souple, cette couche intercalaire portant sur une face un réseau chauffant de fils métalliques fins de résistance électrique disposés entre deux bandes d'amenée de courant, au moins en regard desquelles, il est prévu sur la face opposée de la couche intercalaire, une zone de glissement, autorisant le glissement de la couche intercalaire portant le réseau chauffant de fils par rapport à la couche intercalaire ou la feuille rigide sous-jacente.

Les zones de glissement prévues au moins en regard des bandes d'amenée du courant permettent une désolidarisation de la couche intercalaire portant les bandes d'amenée de la couche sous-jacente, de sorte qu'un déplacement relatif de cette dernière couche n'entraîne pas un déplacement équivalent des bandes d'amenée de courant par rapport à la feuille rigide qui leur fait face et par rapport aux fils de résistance, et par là évite une rupture de ces fils de résistance.

La zone de glissement peut être obtenue par un traitement adapté de l'intercalaire à l'emplacement désiré ou plus avantageusement par la mise en place d'un élément ou matériau glissant en cet emplacement.

Selon une réalisation du vitrage chauffant selon l'invention, celui-ci comprend entre les deux feuilles rigides au moins deux couches intercalaires souples, une couche portant sur sa face au contact d'une feuille rigide un réseau de fils de résistance et les amenées de courant et une autre couche sous-jacente, de laquelle au moins les parties en regard des amenées de courant ont été éliminées et remplacées par un matériau ou élément glissant permettant ainsi le glissement en ces emplacements de la couche intercalaire portant le réseau chauffant, par rapport à la couche sous-jacente.

Dans cette réalisation, la zone de glissement correspond à la zone où le matériau glissant s'est substitué à la couche intercalaire sous-jacente à la couche portant le réseau chauffant.

Le matériau glissant présente une épaisseur égale à celle de la couche intercalaire qu'il remplace donc en partie.

Selon une caractéristique de l'invention, le matériau glissant est formé d'au moins une bande de Teflon® ou matériau similaire.

Selon une caractéristique avantageuse de l'invention, le matériau glissant est formé d'au moins deux bandes superposées de Téflon® ou matériau similaire, l'épaisseur totale des bandes étant égale à l'épaisseur de la couche intercalaire souple manquante en cet emplacement.

Selon une autre réalisation du vitrage selon l'invention, celui-ci comprend trois couches intercalaires souples superposées entre deux feuilles rigides, une première couche intercalaire au contact d'une feuille rigide et portant sur sa face en contact le réseau chauffant et les amenées de courant, une deuxième couche intercalaire sous-jacente, de laquelle les parties en correspondance avec les amenées de courant ont été remplacées par le matériau glissant, et une troisième couche intercalaire sous-jacente à la seconde et qui est au contact de la deuxième feuille rigide.

Comme décrit précédemment, le matériau glissant est en Téflon® ou en matériau similaire et avantageusement constitué d'au moins deux bandes de Téflon® superposées.

Selon une caractéristique du vitrage chauffant selon l'invention, la largeur du matériau glissant, en particulier des bandes de Téflon® est plus importante que la largeur des amenées de courant. Généralement, les bandes de glissement affleurent le bord du vitrage et elles dépassent d'au moins environ 5 millimètres les amenées de courant vers l'intérieur du vitrage.

Comme décrit précédemment, la zone de glissement, avantageusement les bandes de Téflon®, s'étend au moins sous toute la longueur des bandes d'amenée de courant. Cette zone peut s'étendre selon une caractéristique du vitrage selon l'invention, sur tout le pourtour du vitrage, en particulier lorsque les extrémités des bandes d'amenée sont proches l'une de l'autre.

Les feuilles rigides entrant dans la constitution du vitrage selon l'invention peuvent être des feuilles de verre trempées thermiquement, chimiquement ou non. Ce peut être aussi des feuilles en matière plastique rigide telle que le polycarbonate, le polyméthacrylate de méthyle ou une association verre-matière plastique rigide.

La couche intercalaire portant le réseau de fils métalliques chauffants peut être une matière thermoplastique, par exemple en polyvinylbutyral, en polyuréthane.

Généralement le vitrage selon l'invention comprend comme déjà décrit précédemment plusieurs couches intercalaires superposées entre deux feuilles rigides. Ces différentes couches peuvent être en un même matériau thermoplastique ou à base de matière thermoplastique différente.

Aussi, le vitrage selon l'invention peut présenter à la fois des couches en polyvinylbutyral et des couches en polyuréthane et selon des dispositions variables.

Le vitrage chauffant selon l'invention peut présenter deux ou trois, ou plus, feuilles rigides entre lesquelles sont disposées chaque fois une ou plusieurs couches intercalaires.

Le vitrage chauffant peut aussi présenter une structure à bord décalé pour pouvoir être monté de façon connue, à fleur de carrosserie, ou de cockpit.

Sous un des aspects de l'invention, on peut encore réduire le déplacement relatif des bandes d'amenée du courant par rapport aux fils de résistance, en évitant le déplacement des amenées de courant par rapport à la feuille rigide adjacente par exemple en rendant ces amenées de courant adhésives à la feuille rigide.

D'autres avantages et caractéristiques de l'invention apparaitront dans les exemples de réalisation décrit ci-après en référence aux figures.

La figure 1 représente schématiquement, en section, une structure d'un vitrage chauffant.

La figure 2 représente le vitrage de la figure 1, en vue de plan.

La figure 3 représente une variante du vitrage selon l'invention.

La figure 4 représente une autre variante du vitrage selon l'invention, apte à être utilisé en tant que vitrage de cockpit d'avion.

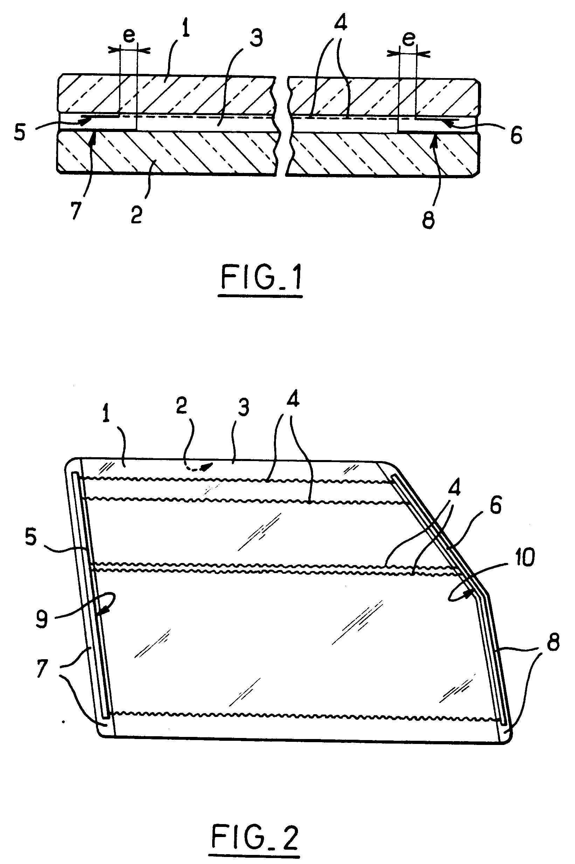

Le vitrage chauffant représenté sur les figure 1 et 2 est constitué de deux feuilles de verre 1 et 2 et d'une couche intercalaire 3, en une matière thermoplastique, par exemple en polyvinylbutyral. Cette couche intercalaire 3 porte un réseau chauffant formé de fils fins métalliques 4 ondulés autour de génératrices s'étendant entre deux bandes d'amenée de courant 5, 6, quelques fils seulement sont représentés sur la figure 2.

On peut utiliser des fils en tungstène, ferro-nickel, cuivre, dont le diamètre peut varier entre 10 et 30 microns par exemple. Les bandes d'amenée du courant 5, 6 sont des bandes métalliques. Les fils 4 sont soudés sur ces bandes métalliques. Chaque amenée de courant peut être formée de deux bandes métalliques superposées prenant les extrémités des fils 4 en sandwich.

La face de la couche intercalaire opposée à celle qui porte le réseau chauffant et les amenées de courant présente sur la partie en regard des bandes d'amenée de courant, des zones 7, 8 de glissement de la couche intercalaire par rapport à la deuxième feuille rigide 2. Ces zones de glissement dépassant en longueur et en largeur les amenées de courant et s'étendent ici sur une longueur correspondant à la longueur des côtés latéraux du vitrage et sur une largeur qui part du bord du vitrage jusqu'au delà du bord intérieur 9, 10 des bandes d'amenée du courant, La distance e entre l'alignement du bord intérieur de l'amenée du courant et le bord intérieur de la zone de glissement étant de préférence supérieur à 6 mm. C'est-à-dire qu'en ces emplacements 7, 8, la couche intercalaire 3 peut glisser sur la feuille de verre 2 lorsque le vitrage est placé dans des conditions de température et de surpression s'exerçant du côté de la feuille 2, tel qu'il prend une flèche orientée vers l'extérieur et qu'il se crée des contraintes entraînant un cisaillement des éléments constitutifs de la structure feuilletée et en particulier de la couche intercalaire 3, par rapport à la feuille de verre 2.

Un vitrage non muni de ces zones de glissement et soumis à une surpression importante du côté de la feuille 2 du vitrage prend comme décrit précédemment une flèche orientée vers l'extérieur et la partie périphérique de la couche intercalaire faisant face à la feuille 2 subit des forces orientées vers la périphérie du vitrage qui tendent à déplacer les amenées de courants par rapport à la feuille 1 et aux fils de résistance 4.

Dans le vitrage selon l'invention, en étant désolidarisé de la feuille 2, les parties correspondant aux zones de glissement de la couche intercalaire glissent sur la feuille de verre 2, de sorte que le déplacement relatif des amenées de courant par rapport à la feuille 1 et aux fils de résistance 4 est fortement réduit. Il s'ensuit un risque très atténué de casse des fils de résistance.

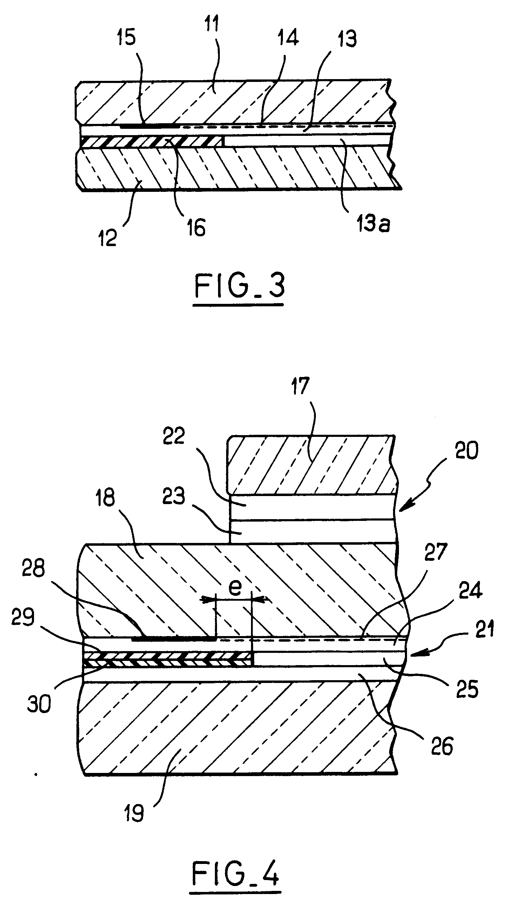

La figure 3 représente en section un côté d'une variante d'un vitrage selon l'invention, qui comporte deux feuilles rigides 11, 12, en verre trempé chimiquement et deux couches intercalaires 13, 13a superposées en polyvinylbutyral par exemple. Ce vitrage peut être utilisé aussi bien dans une disposition dans laquelle la feuille 11 est orientée vers l'extérieur que dans une disposition inverse, cette feuille 11 étant alors orientée vers l'interieur. La couche intercalaire 13 porte le réseau chauffant de fils 14 et les bandes d'amenée de courant 15. La couche intercalaire sous-jacente 13a présente des dimensions réduites par rapport à la couche intercalaire 13, la partie manquante qui se situe en regard de la bande d'amenée 15 sur une zone au moins aussi longue que la bande d'amenée et plus large que cette bande d'amenée 15, est remplacée par une bande d'un matériau glissant, par exemple une bande en Téflon® 16 de la même épaisseur que la couche intercalaire 13a.

Lorsque le vitrage chauffant est soumis à des contraintes de surpression ou au contraire de dépression entre ses deux faces, ces contraintes étant augmentées le cas échéant de contraintes liées aux différences de température entre les deux faces, la bande de Téflon® désolidarise la couche intercalaire de la feuille de verre, au niveau des amenées de courant, des deux côtés du vitrage, de sorte qu'un déplacement de la feuille de verre 12 n'entraîne pas un déplacement équivalent de la bande d'amenée 15. Il s'ensuit une forte réduction du déplacement relatif des amenées de courant par rapport aux fils de résistance et là encore, un risque de casse très diminué par rapport à un vitrage non équipé de bandes de glissement.

La figure 4 représente une autre réalisation du vitrage chauffant selon l'invention.

Le vitrage chauffant est formé ici de trois feuilles rigides 17, 18, 19, en verre trempé chimiquement et deux intercalaires 20, 21.

La feuille de verre 17 orientée vers l'extérieur lorsque le vitrage est en position monté dans un cockpit d'avion ainsi que l'intercalaire 20 qui est ici formé de deux couches 22, 23 de matière thermoplastique, par exemple deux couches de polyuréthane ou deux couches de polyvinylbutyral ou encore une couche de polyuréthane 22 et une couche de polyvinylbutyral 23, sont en décrochement par rapport aux autres éléments du vitrage afin de permettre un montage en affleurement par rapport à la structure du cockpit.

La deuxième feuille de verre 18 est séparée de la troisième feuille 19 destinée à être orientée vers l'intérieur du cockpit par un intercalaire 21 formé ici de 3 couches 24, 25, 26 de 0,5 mm d'épaisseur environ chacune, de polyvinylbutyral par exemple. La couche intercalaire 24 porte sur sa face au contact de la deuxième feuille de verre 18 le réseau chauffant de fils fins métalliques 27 et les amenées de courant 28.

La couche intercalaire 25 présente des dimensions réduites par rapport à la couche intercalaire 24 portant le réseau chauffant, les parties manquantes situées au regard des amenées de courant 28 étant remplacées de chaque côté du vitrage par deux bandes superposées 29, 30 de Téflon® ou d'un matériau équivalent. L'épaisseur des deux bandes superposées 29, 30 de Téflon® est égale à l'épaisseur de la couche intercalaire 25. Les bandes de Téflon® qui s'étendent sur au moins toute la longueur des amenées de courant 28, s'étendent en largeur du bord du vitrage vers le centre du vitrage, jusqu'à environ 8 mm (e) au-delà du bord intérieur des bandes d'amenées de courant 28.

La troisième couche intercalaire 26 présente les mêmes dimensions que celle qui porte le réseau chauffant.

Dans les conditions d'utilisation du vitrage, comme décrit précédemment, la présence des zones de glissement en Téflon® au moins en regard des bandes d'amenée du courant évite un déplacement relatif des bandes d'amenée par rapport au fil de résistance.

Pour évaluer l'amélioration du vitrage chauffant selon l'invention, par rapport à un vitrage chauffant qui n'utilise pas de bandes de glissement, on a fait subir un test de fatigue aux vitrages. Ce test consiste à faire subir 100 000 cycles aux vitrages, chaque cycle d'une durée d'une minute consistant à établir une surpression de 625 mbar sur la face destinée à être orientée vers l'intérieur du cockpit et ce à une température de régulation du réseau chauffant de 40°C.

Les vitrages testés sont ceux décrits en relation avec la figure 4. Ils présentent 190 faisceaux de fils.

On détermine la surface chauffante qui reste active après un nombre de cycles déterminé.

Au bout de 4000 cycles, la surface chauffante de 100% au départ est tombée à 60% pour un vitrage témoin et reste égale à 99% pour le vitrage selon l'invention.

Au bout de 50000 cycles, la surface chauffante est tombée à 55% pour le vitrage témoin et reste de 97% pour le vitrage selon l'invention.

Au bout de 100000 cycles, la surface chauffante est tombée à 50% pour le vitrage témoin, et elle est encore de 95% pour le vitrage selon l'invention.

Le vitrage chauffant selon l'invention peut être utilisé avantageusement en tant que vitrage avion comme décrit précédemment, mais il peut aussi équiper des véhicules maritimes ou terrestres.

## Revendications

1. Vitrage chauffant comprenant au moins deux feuilles rigides (1, 2), notamment en verre, et au moins une couche intercalaire souple (3), une desdites au moins une couche intercalaire souple (3) portant sur sa face au contact de l'une des feuilles rigides (1, 2) un réseau chauffant de fils métalliques fins (4) de résistance électrique disposés entre deux bandes d'amenée de courant (5, 6), caractérisé en ce que la face de la couche intercalaire (3), opposée à celle qui porte les bandes d'amenée de courant (5, 6), comporte au moins en regard desdites bandes d'amenée de courant (5, 6), une zone de glissement (7, 8), autorisant le glissement, dans cette zone, de la couche intercalaire (3) portant le réseau chauffant de fils (4) par rapport à la couche intercalaire ou la feuille rigide sous-jacente.

2. Vitrage chauffant selon la revendication 1, caractérisé en ce qu'il comprend au moins deux couches intercalaires souples (13, 13a) superposées, la première couche intercalaire (13) portant sur une de ses faces, au contact d'une (11) desdites feuilles rigides (11, 12), le réseau chauffant de fils (14) de résistance électrique et les bandes d'amenée de courant (15), et la deuxième couche intercalaire (13a), sous-jacente à la première (13), ayant au moins les parties en regard des amenées de courant remplacées par un matériau ou élément glissant (16) pour former ladite zone de glissement.

3. Vitrage chauffant selon la revendication 1, caractérisé en ce qu'il comprend trois couches intercalaires (24, 25, 26) superposées entre deux feuilles rigides (18, 19), la première couche intercalaire (24) portant à sa surface au contact de la première feuille rigide (18), le réseau chauffant et les bandes d'amenée de courant (28), la deuxième couche intercalaire (25) sous-jacente à la première (24), ayant au moins les parties en regard des amenées de courant remplacées par un matériau glissant (29, 30) pour former ladite zone de glissement, la troisième couche intercalaire (26), sous-jacente à la deuxième (25), étant au contact de la seconde feuille rigide (19).

4. Vitrage chauffant selon une des revendications 2 ou 3, caractérisé en ce que le matériau glissant (16) est une bande d'épaisseur égale à l'épaisseur de la couche intercalaire (13a, 25) qu'il complète, sous-jacente à la couche intercalaire (13; 24) qui porte le réseau chauffant.

5. Vitrage chauffant selon une des revendications 2 ou 3, caractérisé en ce que le matériau glissant est formé d'au moins deux bandes superposées (29, 30) dont l'épaisseur totale est égale à celle de la couche intercalaire (25) qu'il complète.

6. Vitrage chauffant selon une des revendications 1 à 5, caractérisé en ce que la largeur de la zone de glissement est telle qu'elle dépasse le bord intérieur des bandes d'amenée de courant d'au moins 5 mm.

7. Vitrage selon une des revendications 1 à 6, caractérisé en ce que la zone de glissement affleure les bords latéraux du vitrage.

8. Vitrage selon une des revendications 1 à 7, caractérisé en ce que la zone de glissement s'étend sur tout le pourtour du vitrage.

9. Vitrage selon une des revendications 1 à 8, caractérisé en ce que les couches intercalaires (3; 13, 13a; 24, 25, 26) sont des couches thermoplastiques choisies parmi les couches de polyvinylbutyral et les couches de polyuréthane.

10. Vitrage selon une des revendications 1 à 9, caractérisé en ce que le matériau glissant (16; 29, 30) est du type Téflon®.

11. Vitrage selon une des revendications 1 à 10, caractérisé en ce qu'il comprend au moins trois feuilles rigides (17, 18, 19), notamment en verre, la couche intercalaire (24) portant le réseau chauffant étant au contact de la feuille rigide (18) interne à la structure.

12. Vitrage selon la revendication 11, caractérisé en ce qu'il présente une structure à bord décalé.

13. Vitrage selon une des revendications 1 à 12, caractérisé en ce que les bandes d'amenée de courant (5, 6; 15; 28) sont adhérentes à la feuille rigide disposée à leur contact (1; 11; 18).

14. Vitrage selon une des revendications 1 à 13, caractérisé en ce qu'il est utilisé en tant que vitrage d'avion.

## Patentansprüche

1. Heizverglasung mit mindestens zwei starren Scheiben (1, 2), insbesondere aus Glas, und mindestens einer nachgiebigen Zwischenschicht (3), wobei eine der mindestens einen nachgiebigen Zwischenschicht (3) auf ihrer Kontaktfläche mit einer der starren Scheiben (1, 2) ein elektrisches Widerstandsheiznetz aus dünnen Metalldrähten (4) aufweist, die zwischen zwei Stromzufuhrbändern (5, 6) angeordnet sind, **dadurch gekennzeichnet, daß** die Fläche der Zwischenschicht (3) die der gegenüberliegt, welche die Stromzufuhrstreifen (5, 6) trägt, mindestens bezüglich der Stromzufuhrbänder (5, 6) eine Gleitzone (7, 8) aufweist, welcher in dieser Zone das Gleiten der Zwischenschicht (3), die das Drahtheiznetz (4) trägt, in Bezug auf die Zwischenschicht oder die darunterliegende starre Scheibe erlaubt.

2. Heizverglasung nach Anspruch 1, **dadurch gekennzeichnet, daß** sie mindestens zwei übereinanderliegende nachgiebige Zwischenschichten (13, 13a) umfaßt, wobei die erste Zwischenschicht (13) auf einer ihrer Flächen in Kontakt mit einer (11) der starren Scheiben (11, 12) das elektrische Widerstandsheiznetz (14) aus Drähten und die Stromzufuhrbänder (15) trägt und bei der zweiten Zwischenschicht (13a), die unter der ersten (13) liegt, mindestens die Teile gegenüber den Stromzufuhrbänder durch ein Gleitmaterial oder -element (16) ersetzt sind, um die Gleitzone zu bilden.

3. Heizverglasung nach Anspruch 1, **dadurch gekennzeichnet, daß** sie drei Zwischenschichten (24, 25, 26) umfaßt, die zwischen zwei starren Scheiben (18, 19) übereinander gelagert sind, wobei die erste Zwischenschicht (24) auf ihrer Kontaktfläche mit der ersten starren Scheibe (18) das Heiznetz und die Stromzufuhrbänder (28) trägt, bei der zweiten Zwischenschicht (25), die unter der ersten (24) liegt, mindestens die Teile gegenüber der Stromversorgung durch ein Gleitmaterial (29, 30) ersetzt sind, um die Gleitzone zu bilden, und die dritte Zwischenschicht (26), die unter der zweiten (25) liegt, in Kontakt mit der zweiten starren Scheibe (19) steht.

4. Heizverglasung nach einem der Ansprüche 2 oder 3, **dadurch gekennzeichnet, daß** das Gleitmaterial (16) ein Band mit einer Dicke gleich der Dicke der Zwischenschicht (13a, 25) ist, die es vervollständigt, und unterhalb der Zwischenschicht (13; 24) liegt, die das Heiznetz trägt.

5. Heizverglasung nach einem der Ansprüche 2 oder 3, **dadurch gekennzeichnet, daß** das Gleitmaterial aus mindestens zwei übereinanderliegenden Bäncern (29, 30) gebildet wird, deren Gesamtdicke gleich derjenigen der Zwischenschicht (25) ist, die es vervollständigt.

6. Heizverglasung nach einem der Ansprüche 1 bis 5, **dadurch gekennzeichnet, daß** die Größe der Gleitzone so ist, daß es den Innenrand der Stromzufuhrbänder um mindestens 5 mm überschreitet.

7. Verglasung nach einem der Ansprüche 1 bis 6, **dadurch gekennzeichnet, daß** die Gleitzone mit den Längsrändern der Verglasung bündig ist.

8. Verglasung nach einem der Ansprüche 1 bis 7, **dadurch gekennzeichnet, daß** die Gleitzone sich über den ganzen Umfang der Verglasung erstreckt.

9. Verglasung nach einem der Ansprüche 1 bis 8, **dadurch gekennzeichnet, daß** die Zwischenschichten (3, 13, 13a; 24, 25, 26) thermoplastische Schichten sind, die aus Schichten von Polyvinylbutyral und Schichten aus Polyurethan gewählt sind.

10. Verglasung nach einem der Ansprüche 1 bis 9, **dadurch gekennzeichnet, daß** das Gleitmaterial (16; 29, 30) vom Typ Teflon ist.

11. Verglasung nach einem der Ansprüche 1 bis 10, **dadurch gekennzeichnet, daß** sie mindestens drei starre Scheiben (17, 18, 19) umfaßt, insbesondere aus Glas, wobei die Zwischenschicht (24), die das Heiznetz trägt, in Kontakt mit der inneren starren Scheibe (18) der Struktur steht.

12. Verglasung nach Anspruch 11, **dadurch gekennzeichnet, daß** sie eine Struktur mit versetzten Rändern darstellt.

13. Verglasung nach einem der Ansprüche 1 bis 12, **dadurch gekennzeichnet, daß** die Stromzufuhrbänder (5, 6; 15; 28) an der starren Scheibe haften, die mit ihnen in Kontakt steht (1; 11; 18).

14. Verglasung nach einem der Ansprüche 1 bis 13, **dadurch gekennzeichnet, daß** sie als Flugzeugverglasung verwendet wird.

## Claims

1. Heating pane comprising at least two rigid sheets (1, 2), notably of glass, and at least one flexible intermediate film (3), one of said at least one flexible intermediate film (3) carrying, on its face in contact with the one of the rigid sheets (1, 2), a heating network of fine metallic electrical resistance wires (4), disposed between two electrical supply strips (5, 6), characterized in that the face of the intermediate film (3) remote from that which carries the electrical supply strips (5, 6) comprises, at least opposite said electrical supply strips (5, 6), a sliding zone (7, 8), permitting sliding, in this zone, of the intermediate film (3) carrying the heating network of wires (4) relative to the underlying intermediate film or rigid sheet.

2. Heating pane according to Claim 1, characterized in that it comprises at least two superimposed, flexible intermediate films (13, 13a), the first intermediate film (13) carrying on one of its faces, in contact with one (11) of said rigid sheets (11, 12), the heating network of electrical resistance wires (14) and the eletrical supply strips (15), and the second intermediate film (13a), underlying the first (13), having at least the parts opposite the electrical supply strips replaced by a sliding material or sliding element (16) for forming said sliding zone.

3. Heating pane according to Claim 1, characterized in that it comprises three superimposed intermediate films (24, 25, 26), between two rigid sheets (18, 19), the first intermediate film (24) carrying, on its surface in contact with the first rigid sheet (18), the heating network and the electrical supply strips (28), the second intermediate film (25) underlying the first (24) having at least the parts opposite the electrical supply strips replaced by a sliding material (29, 30) for forming said sliding zone, the third intermediate film (26), underlying the second (25), being in contact with the second rigid sheet (19).

4. Heating pane according to one of Claims 2 or 3, characterized in that the sliding material (16) is a strip of thickness equal to the thickness of the intermediate film (13a, 25) which it complements, underlying the intermediate film (13; 24) which carries the heating network.

5. Heating pane according to one of Claims 2 or 3, characterized in that the sliding material is formed of at least two superimposed strips (29, 30), the total thickness of which is equal to that of the intermediate film (25) which it complements.

6. Heating pane according to one of Claims 1 to 5, characterized in that the width of the sliding zone is such that it extends beyond the inner edge of the electrical supply strips by at least 5 mm.

7. Pane according to one of Claims 1 to 6, characterized in that the sliding zone is flush with the lateral edges of the pane.

8. Pane according to one of Claims 1 to 7, characterized in that the sliding zone extends around the entire periphery of the pane.

9. Pane according to one of Claims 1 to 8, characterized in that the intermediate films (3; 13, 13a; 24, 25, 26) are thermoplastics films chosen from films of polyvinyl butyral and films of polyurethane.

10. Pane according to one of Claims 1 to 9, characterized in that the sliding material (16; 29, 30) is of the type of Teflon®.

11. Pane according to one of Claims 1 to 10, characterized in that it comprises at least three rigid sheets (17, 18, 19), notably of glass, the intermediate film (24) carrying the heating network being in contact with the rigid sheet (18) internal to the structure.

12. Pane according to Claim 11, characterized in that it has a structure with an offset edge.

13. Pane according to one of Claims 1 to 12, characterized in that the electrical supply strips (5, 6; 15; 28) are adherent to the rigid sheet disposed in contact with them (1; 11; 18).

14. Pane according to one of Claims 1 to 13, characterized in that it is used as aircraft pane.
